# EUROPEAN PATENT APPLICATION

(11) **EP 0 543 544 A1**
(43) Date of publication of application: **26.05.1993**
(21) Application number: 92310204.0
(22) Date of filing: 06.11.1992
(51) Int. Cl.: G01N 1/00, G01N 1/28

(54) **Apparatus for sampling and diluting a liquid specimen**

(30) Priority: 20.11.1991 JP 331284/91
(71) Applicant: TOA MEDICAL ELECTRONICS CO., LTD., Chuoku, Kobe (JP)
(72) Inventor: Demachi, Takashi, Tarumiku, Kobe (JP)
(74) Representative: Price, Paul Anthony King

(57) **Abstract**

The apparatus for analyzing a liquid specimen (e.g. blood) comprises a sampling valve (11) consisting of two fixed elements (10, 14) and a movable element (12); sample aspiration means (C0); dilution liquid dispensing means (Ci); containers (Bi) for receiving diluent liquid and samples of liquid specimen from the sampling valve (11); setting means (30) for selecting the samples that the sampling valve is to dispense; control means (28) for selectively operating the dispensing means; and driving means (26) for selectively driving the dispensing means. By only dispensing the samples of a specimen that are necessary for the required analysis of the specimen, dilution liquid is not wasted dispensing and diluting unwanted samples.

## Description

The present invention relates to apparatus for sampling a liquid specimen such as blood. The apparatus has a sampling valve for producing metered samples of a liquid specimen and dispensing some or all of them, e.g. to an analyzer.

Apparatus for counting blood corpuscles such as erythrocytes, apparatus for classifying leukocytes, and apparatus for counting reticulocytes are known well. Apparatus combining all of these functions into one multifunctional apparatus is also known. The multifunctional apparatus is capable of measuring multiple characteristics in one sampling operation. Depending on the specimen, however, unnecessary characteristics are also measured, and sample and reagents are wasted.

To eliminate such waste, it is necessary to supply the correct number of samples of each specimen to the analyzer. For example, in the field of biochemical examination, the sampling method is to aspirate an appropriate amount of sample into a pipette, and then to discharge the sample into a reaction vessel. This method is simple but the precision is poor. In particular, it has difficulty handling a highly viscous sample such as blood. Accordingly, in blood cell counting apparatus, the specimen is sampled by aspirating and discharging a rod-like length of the specimen by using a sampling valve.

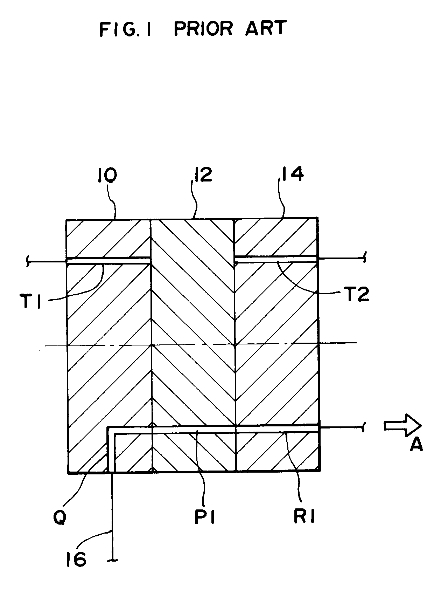

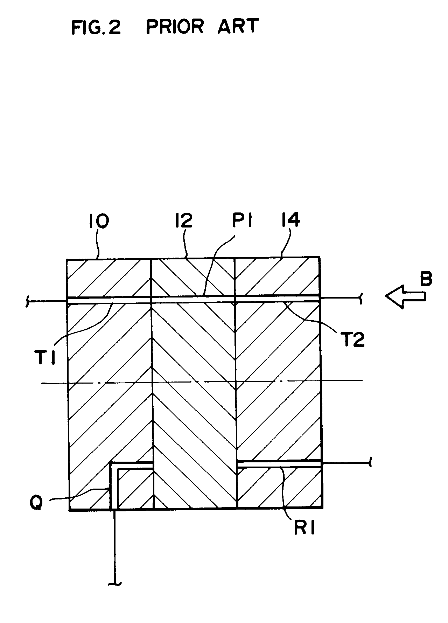

Referring now to Fig. 1 and Fig. 2, the structure and operation of a general sampling valve are briefly described below. Usually, a sampling valve consists of two fixed elements 10, 14 and a movable element 12 enclosed by the fixed elements 10, 14. Fig. 1 and Fig. 2 show two states of the sampling valve. In Fig. 1, the specimen flows in the direction of arrow A, that is, from a pipette 16 to an inlet passage Q, metering (measuring quantity) passage P1, and outlet passage R1, and fills up the metering passage P1 of the movable element 12 (this is called the first state). As the movable element 12 moves from the first state, it moves to the state shown in Fig. 2 (this is called the second state), and the specimen filling up the metering passage P1 in the first state is discharged, and is transferred outside the sampling valve, together with a liquid such as diluent moving in the direction of arrow B from the passage T2 to the passage T1.

According to the present invention, there is provided apparatus for sampling a liquid specimen, comprising: a sampling valve having two fixed elements and a movable element positioned between and in contact with surfaces of the elements and having a plurality of sample metering passages, the fixed elements having a plurality of passages for communicating with the metering passages of the movable element, and the movable element being movable between a first state in which the metering passages may be filled with liquid specimen to produce a plurality of metered samples of the liquid specimen, and a second state in which the metered samples may be discharged from the metering passages; aspiration means for supplying the specimen to the sampling valve; a plurality of dispensing means for supplying dilution liquid to the metering passages of the movable element to discharge the samples; a plurality of containers for receiving the discharged samples; setting means for selecting the samples that are to be discharged; control means for generating a control signal for selectively actuating the dispensing means in accordance with the selection made by the setting means; and driving means for operating the dispensing means in accordance with the control signal.

With the apparatus of the invention it is possible to dispense some or all of the samples of each specimen. Thus, if only some samples need to be dispensed, dilution liquid is not wasted dispensing unwanted samples.

Preferably, the apparatus is arranged, when one of the dispensing means is not operated for a specified number of successive specimens, to operate that dispensing means to prevent sample contamination of the passages of the fixed elements. Conveniently, the special operation of the dispensing means occurs during the first state of processing, for example, the next specimen after the specified number of successive specimens.

Preferably, the apparatus is arranged, when one of the dispensing means has been operated, to operate that dispensing means during the first state for the next specimen to reduce contamination by the previous specimen. Because the flushing occurs during the first state for the next specimen, it does not interfere with the selective dispensing of the samples of the next specimen that occurs when the movable element has moved to its second state.

Non-limiting embodiments of the invention will now be described with reference to the accompanying drawings, in which:-
Fig. 1 is a sectional explanatory diagram showing the first state of filling the metering passage with specimen in a general conventional sampling valve;
Fig. 2 is a sectional explanatory diagram showing the second state of discharging and transferring a sample from the general conventional sampling valve;
Fig. 3 is a schematic structural drawing showing the main parts of an embodiment of apparatus for sampling a liquid specimen in accordance with the invention;
Fig. 4 is a schematic structural drawing showing an example of the setting means of Fig. 3;
Fig. 5 is a sectional explanatory diagram showing the first state of filling the metering passages with specimen for the sampling valve of Fig. 3; and
Fig. 6 is a sectional explanatory diagram showing the second state of discharging and transferring samples from the sampling valve of Fig. 3.

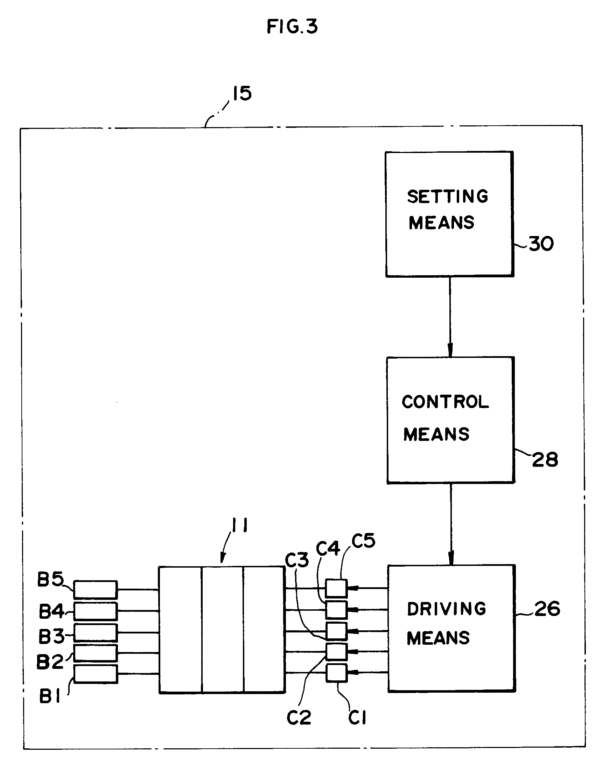

Figs. 3 to 6 show an embodiment of the invention. The apparatus for sampling a liquid specimen comprises a sampling valve 11 which consists of two fixed elements 10, 14 and a movable element 12 positioned between and in contact with surfaces of the fixed elements and having a plurality of sample metering passages P. The fixed elements 10, 14 contain passages for communicating with the metering passages P of the movable element 12. The movable element 12 is movable between a first state in which the metering passages P of the movable element 12 may be filled with liquid specimen to produce a plurality of metered samples of the liquid specimen, and a second state in which the metered samples may be discharged from the metering passages P.

The apparatus also comprises:
aspiration means C0 for supplying the specimen to the sampling valve 11;
a plurality of dispensing means C1 to C5 for supplying dilution liquid to the metering passages P of the movable element 12 to discharge the samples;
a plurality of containers B1 to B5 for receiving the discharged samples;
setting means 30 for selecting the samples that are to be discharged;
control means 28 for generating a control signal for selectively actuating the dispensing means C1 to C5 in accordance with the selection made by the setting means 30; and
driving means 26 for driving the dispensing means C1 to C5 in accordance with the control signal.

Thus, if certain characteristics of a specimen are to be measured, only the appropriate samples of the specimen are dispensed.

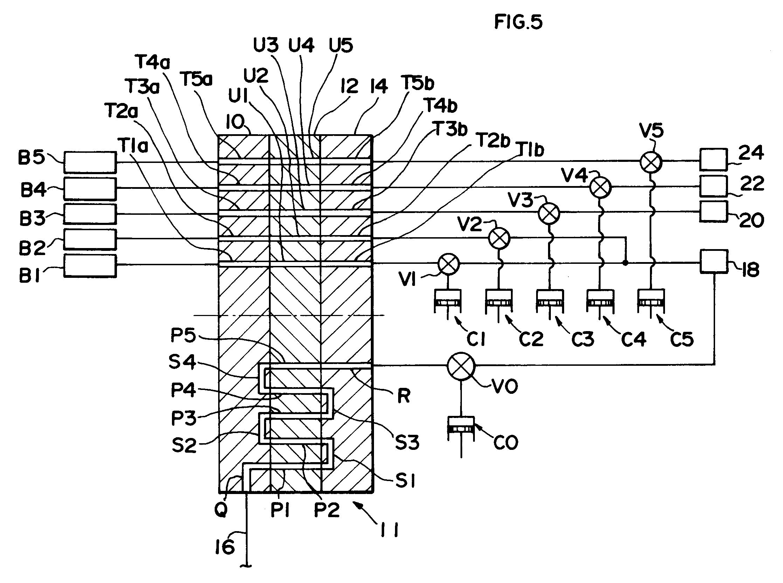

As may be seen from Fig. 5, the fixed elements 10, 14 contain:
relay passages S1, S2, ..., Sn-1 connecting the metering passages P1, P2, ..., Pn (n=5 for the illustrated embodiment) in series when the movable element 12 is in its first state;
an inlet passage Q communicating with the first metering passage P1 of the series of metering passages when the movable element 12 is in its first state for supplying the specimen to the first metering passage P1; and
an outlet passage R communicating with the last metering passage Pn of the series of metering passages when the movable element 12 is in its first state for removing excess specimen.

The sampling valve 11 also includes pairs of first and second transfer passages. The first transfer passages T1a, T2a, ..., Tna are disposed in one of the fixed elements 10 and the second transfer passages T1b, T2b, ..., Tnb are disposed in the other of the fixed elements 14. Each pair of transfer passages T1a and T1b, T2a and T2b, ..., Tna and Tnb communicates with a respective one of the metering passages P1, P2, ..., Pn when the movable element 12 is in its second state. Cleaning passages U1, U2, ..., Un are disposed in the movable element 12 and each cleaning passage communicates with a respective one of the pairs of transfer passages, when the movable element 12 is in its first state.

The aspiration means C0 is, for example, a syringe and is connected to the outlet passage R. Each dispensing means C1, C2, ..., Cn is, for example, a syringe and is connected to one of the transfer passages of a respective pair of the transfer passages. The other transfer passage of each pair is connected to a respective one of the containers B1, B2, ..., Bn.

In the first state of the sampling valve 11, when the separation means C0 is activated, the specimen flows in a series of passages comprising the inlet passage Q, metering passages P, relay passages S, outlet passage R, and each passage is filled up. At the same time, when a certain dispensing means Ci is activated, the dilution liquid is sent into the container Bi through the passages Tib, Ui, Tia. This dilution liquid is used for cleaning.

Then, the sampling valve 11 changes from the first state to the second state. When the dispensing means Ci operates, dilution liquid pushes out the sample measured quantitatively in the passage Pi as the dilution liquid passes through the passages Tib, Pi, Tia, and the dilution liquid and sample are mixed in the container Bi to produce a diluted sample suitable for measurement. The prepared diluted sample is supplied from the container Bi to a measuring unit (not shown) of the apparatus 15 for analyzing a liquid specimen, and is measured and analyzed.

Afterwards, the sampling valve 11 returns to the first state, and the liquid for cleaning (or diluent liquid) is supplied to the outlet passage R, and the specimen remaining in the series of passages is washed out, and the passages are cleaned.

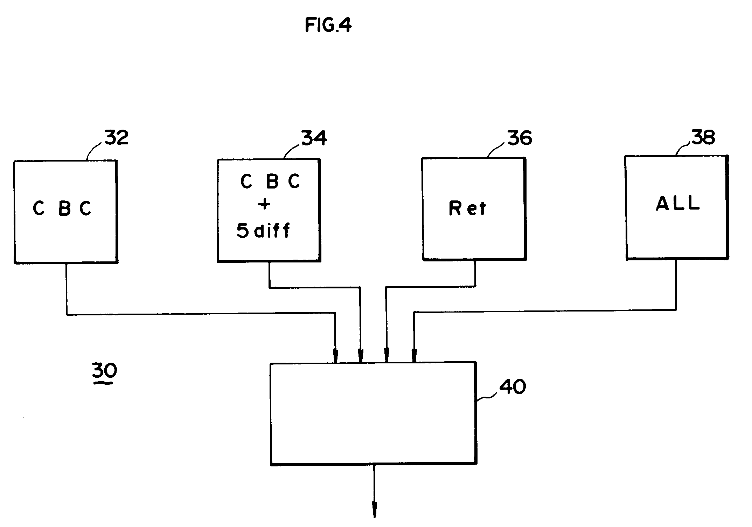

By knowing the characteristics of the specimen that are to be measured, the setting means 30 selects the number and particular samples to be discharged into the containers B. The setting means 30 may use, for example, a work load list contained in work load setting means and illustrated later on in Table 1. By entering the number of the specimen into the work load setting means, the characteristic selection information for that specimen is obtained. For each characteristic or group of characteristics, "1" means that measurement is to occur and "0" means that measurement is not to occur. For each characteristic or group, it is possible to preset measurement or no measurement for a plurality of specimens. This is useful when automatically feeding the specimens to the apparatus by using a sampler (sample feeding device). As shown in Fig. 4, the characteristics may be selected by using switch means 32, 34, 36, 38. This is useful when manually processing specimens.

In accordance with the data produced by the setting means 30, the control means 28 generates the control signal for actuating the particular dispensing means specified by the data. The control signal causes the driving means 26 to drive the specified dispensing means.

When not measuring a certain characteristic, it is not necessary to prepare a diluted specimen for measuring that characteristic. Thus, the dispensing means Ci corresponding to that characteristic is not operated.

However, each passage Pi communicates with the passages Tia, Tib in the second state, and the sample in the passage Pi gradually mixes with the liquid in the passages Tia, Tib. It is therefore preferable to clean all passages before the next specimen is processed. More practically, when a certain characteristic is not measured for a specified successive number of specimens, that is, when the dispensing means Ci for that characteristic is not operated for the specified successive number of times, the dispensing means Ci is operated in the first state for the next specimen to clean the passages Tia, Tib.

The dispensing means Ci may be operated twice in the first state, so that a first batch of dispensing liquid may be discharged from the container Bi and a second batch of dispensing liquid may be retained in the container Bi. The second batch of liquid dispensed into the container Bi does not contain any specimen, and therefore the container Bi is not contaminated with specimen.

When a certain characteristic is measured for a particular specimen, then during the processing of the next specimen, whether that characteristic is measured or not, the corresponding dispensing means Ci may be operated twice in the first state. The first batch of dispensing liquid is discharged from the container Bi and the second batch of dispensing liquid is retained in the container Bi. Thus, since the container Bi is cleaned, it does not remain contaminated with sample.

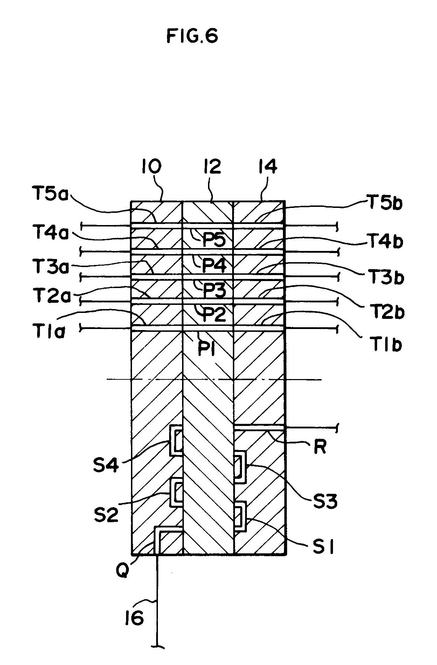

Before moving on to discuss Figs. 3 to 6 in detail, it should be noted that in Fig. 6 substantially only the sampling valve 11 is shown for the sake of simplification.

In the embodiment of Figs. 3 to 6, the sampling valve 11 is provided with, for example, five metering passages P1, P2, P3, P4, P5. Accordingly, there are five sets of first and second transfer passages T1a, T2a, T3a, T4a, T5a (first transfer passages), T1b T2b, T3b, T4b, T5b (second transfer passages) and cleaning passages U1, U2, U3, U4, U5. There are also five dispensing means (for example, syringes) C1, C2, C3, C4, C5 and containers B1, B2, B3, B4, B5 (chambers). There are four relay passages S1, S2, S3, S4 connecting the metering passages P1, P2, P3, P4, P5 in series. Numeral 16 is a pipette, 18, 20, 22, 24 are cleaning liquid (diluent liquid) tanks, and V0, V1, V2, V3, V4 are three-way valves. The diluent liquid may also be used as the cleaning liquid.

Of the metering passages, the passages P1, P2, P3 provide samples for measuring eight characteristics of CBC (complete blood count) [ordinary blood counting characteristics of WBC (white blood cells), RBC (red blood cells), HGB (hemoglobin), HCT (hematocrit), MCV (mean red corpuscular volume), MCH (mean red corpuscular hemoglobin), MCHC (mean red corpuscular hemoglobin concentration), and PLT (platelets)]. The passage P4 provides a sample for measuring WBC 5diff (five classifications of leukocytes). The passage P5 provides a sample for measuring Ret (reticulocytes).

Hence, in the case of CBC measurement, the group comprising the dispensing means C1, C2, C3 is actuated. In the case of WBC 5diff measurement, the dispensing means C4 operates. In the case of Ret measurement, the dispensing means C5 is actuated. For this embodiment, there are four measurement patterns:
1. measurement of CBC only (hereinafter mode 1),
2. measurement of CBC + WBC 5diff (mode 2),
3. measurement of Ret only (mode 3),
4. measurement of CBC + WBC 5diff + Ret, i.e. ALL characteristics (mode 4).

Hence the dispensing means may be operated as follows:
C1, C2, C3 for mode 1,
C1, C2, C3, C4 for mode 2,
C5 for mode 3, and
C1, C2, C3, C4, C5 for mode 4.

Table 1 is an example of a work load list of the work load setting means for setting modes 1 to 4. Modes are set for the specimens before the specimens are measured, by entering the ID No. (specimen identification number) (an arbitrary number of up to eight digits), and entering for each characteristic or group of characteristics a "1" if measurement is to occur and "0" if measurement is not to occur. According to the information set in the work load setting means, it is judged which dispensing mode 1 to 4 should be actuated by the control means 28, and the appropriate control signal is generated at the specified time in the measurement sequence. In accordance with the control signal, the driving means 26 drives the appropriate dispensing means. This setting by the work load setting means is useful when automatically measuring specimens.

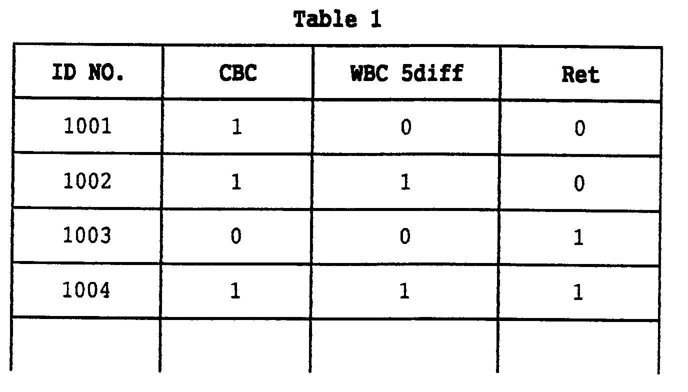

Fig. 4 shows an alternative example of the setting means 30. Numerals 32, 34, 36, 38 are switches, and the switch on/off information is entered into a control means 40, and one of the modes 1 to 4 is selected. When the specimen is measured, the dispensing means C1 to C5 are selectively actuated at a specified time in order to implement the measurement mode 1, 2, 3 or 4. By changing the switch settings, a different measurement mode may be selected for the next specimen. This arrangement is useful when manually processing specimens.

Preferably, a blood cell counter is provided with both setting means. The appropriate one of the two setting means is selected depending on whether the specimen processing is automatic or manual. By pressing a start switch for a specimen sampler, the sampler begins to work and automatic processing begins. By pressing a start switch for manual processing, a specimen is aspirated.

In the case of the manual processing mode, by setting the four switches 32, 34, 36, 38 before measurement begins, the measured characteristics are set. Since the same setting is maintained until the setting is changed, when it is desired to measure repeatedly the same characteristics, it is not necessary to keep on resetting the switches. After setting of the switches, the manual start switch is pressed to aspirate the first specimen.

In the case of the automatic processing mode, every specimen has a number (ID No.) set in the work load setting means (e.g. a personal computer) connected to the apparatus. When only the specimen number is set, an error message is displayed and, if the start switch for the sampler is pressed, the sampler does not start. Alternatively, when only the specimen number is set, a default option of measuring all characteristics may be used. After preparing the work load list, a rack holding the specimens is fed into the sampler, and the specimen number information and the measurement mode information is transferred to the control means 30 of the apparatus in response to pressing a start switch of the work load setting means, thereby starting the operation of the sampler.

When, for example, mode 1 is to be used continuously, samples are produced in the passages P1, P2, P3, P4, P5 of the sampling valve 11 as shown in Fig. 5. The samples to be used for measurement are only the samples in the passages P1, P2, P3. The samples in the passages P4, P5 are not used. In other words, only the dispensing means C1, C2, C3 are operated in the first and second states of the sampling valve 11, while the dispensing means C4, C5 are not operated. However, the samples in passages P4, P5 are in contact with the passages T4a, T4b, T5a, T5b and slightly mix with the liquid in these passages. If, for example, the dispensing means C4, C5 are not operated on ten successive occasions, then for the next specimen the dispensing means C4, C5 are actuated, and the passages T4a, T4b, T5a, T5b are cleaned.

The above-described embodiments of the invention have the following characteristics.
(1) By selecting the characteristics to be measured for a particular specimen, only the appropriate number of samples is dispensed from the sampling valve. Thus, diluent liquid used to dispense the samples is not wasted unnecessarily.
(2) If a particular metering passage is not cleared of its sample in the second state for a specific number of successive specimens, then even if the sample of the next specimen is not needed the metering passage is cleaned with dispensing/diluent liquid in order to prevent the build-up of sample contamination in the adjacent transfer passages.

Having described preferred embodiments of the invention with reference to the accompanying drawings, it is to be understood that the invention is not limited to those precise embodiments, and that various changes and modifications may be made by one skilled in the art without departing from the invention.

## Claims

1. Apparatus for sampling a liquid specimen, comprising:
a sampling valve (11) having two fixed elements (10, 14) and a movable element (12) positioned between and in contact with surfaces of the fixed elements and having a plurality of sample metering passages (P), the fixed elements (10, 14) having a plurality of passages for communicating with the metering passages (P) of the movable element (12), and the movable element (12) being movable between a first state in which the metering passages (P) may be filled with liquid specimen to produce a plurality of metered samples of the liquid specimen, and a second state in which the metered samples may be discharged from the metering passages (P);
aspiration means (C0) for supplying the specimen to the sampling valve (11);
a plurality of dispensing means (C) for supplying dilution liquid to the metering passages (P) of the movable element (12) to discharge the samples;
a plurality of containers (B) for receiving the discharged samples;
setting means (30) for selecting the samples that are to be discharged;
control means (28) for generating a control signal for selectively actuating the dispensing means (C) in accordance with the selection made by the setting means (30); and
driving means (26) for operating the dispensing means (C) in accordance with the control signal.

2. Apparatus according to claim 1, wherein the apparatus is arranged, when one of the dispensing means (C) is not operated, for a specified number of successive specimens, to operate that dispensing means to prevent sample contamination of the passages of the fixed elements (10, 14).

3. Apparatus according to claim 2, wherein that dispensing means (C) is arranged to be operated twice, with the dilution liquid of its first operation flowing into and being discharged from the respective container (B), prior to the dilution liquid of its second operation flowing into the respective container (B).

4. Apparatus according to claim 1 or 2, wherein the apparatus is arranged, when one of the dispensing means (C) has been operated, to operate that dispensing means during the first state for the next specimen to reduce contamination by the previous specimen.

5. Apparatus according to claim 4, wherein that dispensing means (C) is arranged to be operated twice, with the dilution liquid of its first operation flowing into and being discharged from the respective container (B), prior to the dilution liquid of its second operation flowing into the respective container (B).

6. Apparatus according to any one of claims 1 to 5, wherein the setting means (30) permits presetting of the sample selections for a plurality of specimens.

7. Apparatus according to any one of claims 1 to 5, wherein the setting means (30) comprises switch means (32, 34, 36, 38) for permitting manual selection of the samples that are to be discharged.
